**Europäisches Patentamt**

**European Patent Office**

**Office européen des brevets**

(11) Veröffentlichungsnummer: **0 191 403**
.**A1**

# EUROPÄISCHE PATENTANMELDUNG

(21) Anmeldenummer: 86101428.0

(22) Anmeldetag: 04.02.86

(51) Int. Cl.⁴: **H01G 1/005** , H01G 4/32

(30) Priorität: 08.02.85 DE 3504395

(43) Veröffentlichungstag der Anmeldung:
20.08.86 Patentblatt 86/34

(84) Benannte Vertragsstaaten:
DE FR GB IT

(71) Anmelder: **Siemens Aktiengesellschaft Berlin und München**
**Wittelsbacherplatz 2**
**D-8000 München 2(DE)**

(72) Erfinder: **Vetter, Harald, Dipl.-Ing. FH**
**Weinberg 7**
**D-8400 Regensburg(DE)**

(54) **Verfahren zum Herstellen eines elektrischen Wickelkondensators.**

(57) Ein elektrischer Wickelkondensator besteht aus aufgewickelten Lagen von Kunststoffolien (1,6). Die Kunststoffolien (1) sind beidseitig mit aufgedampften Metallschichten (2, 3) versehen und unter Verwendung einer unmetallisierten Stützfolie (6) aufgewickelt. Die Metallschichten (2, 3) weisen im Randbereich Randverstärkungen (7, 8) auf, die mittels eines Metallspritzverfahrens hergestellt werden und mit Stirnkontaktschichten (4, 5) verbunden sind. Der Versatz (v) wird durch die unterschiedliche Breite der Folien (1, 6) bestimmt. Durch geeignete Wahl der Breite b der Randverstärkungen (7, 8) kann die Impulsbelastbarkeit in weiten Grenzen variiert werden.

EP 0 191 403 A1

Verfahren zum Herstellen eines elektrischen Wickelkondensators

Die Erfindung betrifft ein Verfahren zum Herstellen eines elektrischen Wickelkondensators, indem Dielektrikumsfolien mit einem Versatz gegeneinander aufgewickelt werden, wobei zumindest ein Teil der Folien vor dem Aufwickeln mit aufgedampften regenerierfähig dünnen Metallschichten versehen werden, die nach dem Aufwickeln an den Stirnseiten des Kondensatorwickels mit Schoopschichten kontaktiert werden und bei dem die Metallschichten in den randseitigen Kontaktierzonen mit einer Verstärkung versehen werden.

Derartige Kondensatoren sind beispielsweise aus der DE-AS 11 33 035 bekannt. Dort werden die Verstärkungen im Randbereich durch Aufdampfen hergestellt und haben die Aufgabe, einerseits den Verlustfaktor des Kondensators zu senken und andererseits eine Abhängigkeit der Kapazität des Kondensators von der angelegten Frequenz zu vermindern.

Die bekannte Randverstärkung erhöht andererseits auch die Impulsbelastbarkeit der Kondensatoren. Weitere Möglichkeiten, die Impulsbelastbarkeit zu erhöhen bestehen darin, die Folien versetzt aufzuwickeln und gegebenenfalls den Rand- bzw. Kontaktierbereich mit einem Wellenschnitt zu versehen.

Da jedoch die aufgedampften Randverstärkungen wirtschaftlich nicht in beliebiger Schichtdicke herzustellen sind, sind der Steigerung der Impulsbelastbarkeit mit den bekannten Maßnahmen Grenzen gesetzt.

Aufgabe der Erfindung ist es, die Impulsbelastbarkeit von Wickelkondensatoren, insbesondere bei großen Vollkunststoffwickeln für Leistungskondensatoren, zu erhöhen.

Diese Aufgabe wird erfindungsgemäß dadurch gelöst, daß die Randverstärkungen mittels eines Metallspritzverfahrens hergestellt werden.

Die Randverstärkungen können vorzugsweise im Banddurchlaufverfahren unter Verwendung von Blenden aufgebracht werden. Bei der Verwendung von Zink weisen die Randverstärkungen vorteilhaft eine mittlere Schichtdicke von bis zu 20 μm auf und besitzen beispielsweise bei einer mittleren Schichtdicke von ca. 2 μm eine Breite von ca. 2mm.

Die nach dem erfindungsgemäßen Verfahren hergestellten Kondensatoren weisen eine bedeutend höhere Impulsbelastbarkeit als die herkömmlichen Kondensatoren auf und zeichnen sich insbesondere auch dadurch aus, daß die Randverstärkungen in wirtschaftlicher Weise preigünstig hergestellt werden kann.

Die Vorteile des Anmeldungsgegenstandes werden darauf zurückgeführt, daß die aufgespritzten Metallschichten eine tröpfchenförmige Gitterstruktur aufweisen, die von der Aufspritzrichtung abhängig ist. Die Gitterstrukturen der aufgespritzten Randverstärkungen sind somit um ca. 90° gegenüber den Gitterstrukturen der Stirnkontaktschichten gedreht, so daß eine besonders gute Haftung zwischen den beiden unterschiedlichen Schichten erzielt wird.

Weiterhin wird durch die aufgespritzten Metallschichten erreicht, daß die effektive Kontaktierfläche erhöht wird, was sich günstig auf die Impulsbelastbarkeit auswirkt.

Die genannten Vorteile führen weiterhin dazu, daß die Kondensatorfolien mit einem geringeren Versatz gegeneinander aufgewickelt werden können, so daß die effektive Volumenkapazität des Kondensators bei verkleinerten Abmessungen vergrößert wird.

Weitere Vorteile des Gegenstandes der Erfindung werden anhand der folgenden Ausführungsbeispiele aufgezeigt. In der dazugehörenden Zeichnung zeigen:

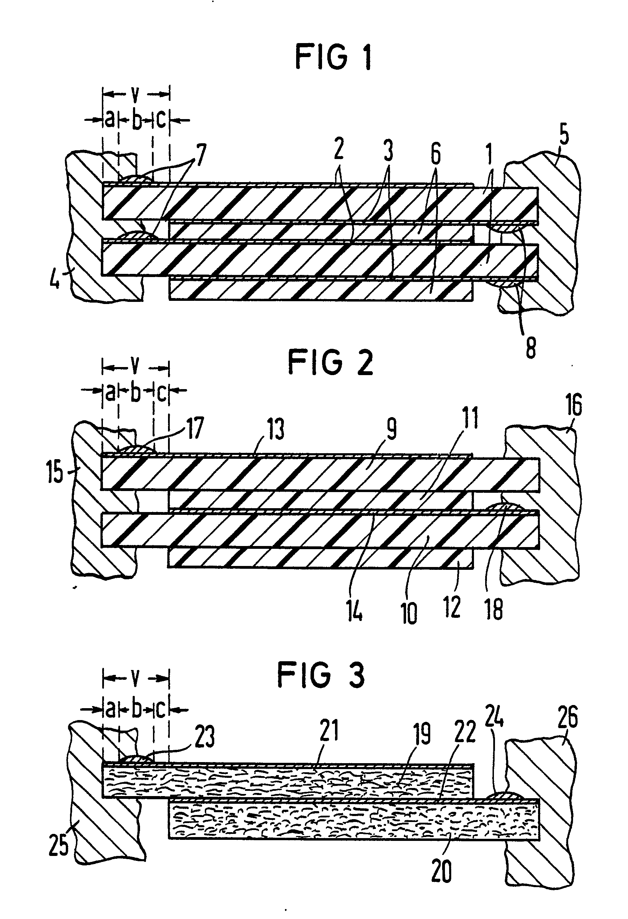

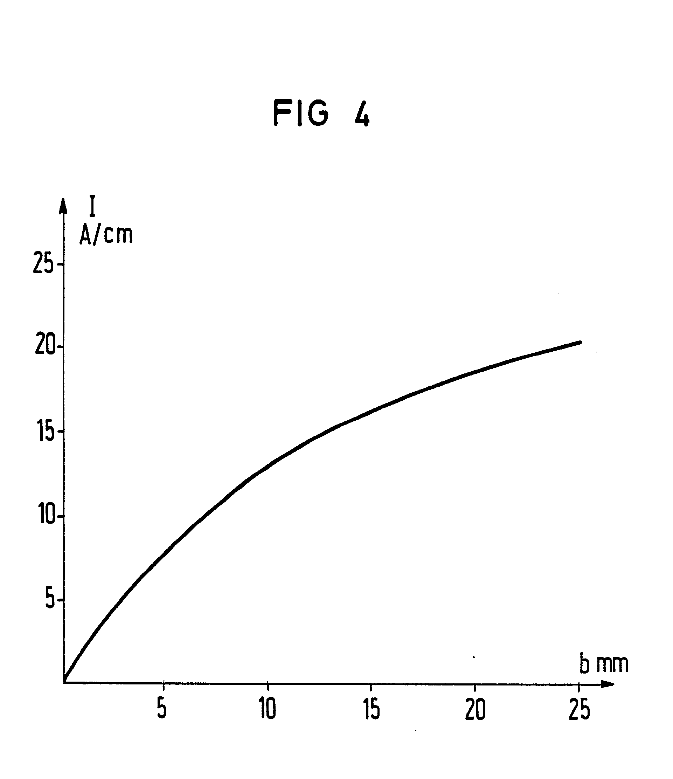

Die Figuren 1 bis 3 verschiedene Kondensatoraufbauten und Fig. 4 die Abhängigkeit der Impulsbelastbarkeit von der Breite der Randverstärkung.

In der Fig. 1 ist ein Kondensatoraufbau dargestellt, bei dem eine Kunststoffolie 1 beidseitig mit aufgedampften Metallschichten 2, 3 versehen ist. Damit bei der Kontaktierung mit den Stirnkontaktschichten 4, 5 kein Kurzschluß zwischen gegenpoligen Elektroden entstehen kann, ist auf unterschiedlichen Seiten der Kunststoffolie 1 jeweils ein Freirand ohne Metallbeschichtung vorgesehen. Die Kunststoffolie 1 wird unter Zwischenlage einer unmetallisierten Kunststoffolie 6 geringerer Breite zu dem Kondensatorwickel aufgewickelt. In den Kontaktierbereichen mit den Stirnkontaktschichten 4, 5 weisen die aufgedampften Metallschichten 2, 3 Randverstärkungen 7, 8 auf, die nach einem Metallspritzverfahren im Banddurchlauf hergestellt sind.

Durch die unterschiedliche Breite der Kunststoffolien 1 bzw. 6 ergibt sich im Randbereich ein Versatz v. Die Breite b der Randverstärkung 7, 8 wird durch eine Blende bestimmt, die während des Aufspritzens der Randverstärkungen 7, 8 die übrigen Bereiche abschirmt. Durch geeignete Wahl der Breite b kann die Impulsbelastbarkeit der Kondensatoren in relativ weiten Grenzen variiert werden.

Durch den Abschatteffekt der Bekeimblende ergibt sich ein Bereich a mit nur minimaler Durchlaufbekeimung. Der Bereich c stellt einen Sicherheitsabstand dar, damit eine einwandfreie Wickelgeometrie gewährleistet wird.

Die Folien 1, 6 sind beispielsweise 5 bis 20 μm dick und bestehen z.B. aus Polypropylen. Die Dicke der Folie 6 muß dabei so bemessen sein, daß in den Randbereichen der erforderliche Freiraum für die Schichtdicke der Randverstärkungen 7, 8 erhalten wird. Die Randverstärkungen können bis zu einer Dicke von maximal ca. 20 μm aufgebracht werden.

Bei einer Spritzleistung von 10 kg/h Zn und einer Bandgeschwindigkeit der Kondensatorfolie von 4 m/s ergibt sich eine bevorzugte Bekeimschichtstärke von ca. 2 μm. Die Breite b der Randverstärkungen 7, 8 beträgt in diesem Fall z.B. 2 mm und die Bereiche a bzw. c 0,5 mm bzw. 0,5 bis 1 mm.

In der Fig. 2 ist ein weiteres Ausführungsbeispiel dargestellt, bei dem zwei einseitig metallisierte Kunststoffolien 9, 10 und zwei Stützfolien 11, 12 miteinander verwickelt werden. Die Kunststoffolien 9, 10 weisen Metallisierungen 13, 14 auf, die in den Kontaktierzonen mit Stirnkontaktschichten 15, 16 mit aufgespritzten Randverstärkungen 17, 18 versehen sind. Auch bei diesem Beispiel wird die Größe des Versatzes v durch die unterschiedliche Breite der Folien 9 bis 14 bestimmt.

In der Fig. 3 ist ein Ausführungsbeispiel dargestellt, bei dem zwei Papierfolien 19, 20 mit einseitigen Metallschichten 21, 22 ohne Zwischenlage einer Stützfolie mit einem Versatz v gegeneinander zu einem Kondensatorwickel aufgewickelt werden. Auch hier weisen die Metallschichten 21, 22 aufgespritzte Randverstärkungen 23, 24 auf, die einen guten Kontakt zu den Stirnkontaktschichten 25, 26 und damit eine erhöhte Impulsbelastbarkeit gewährleisten.

Neben den in den Ausführungsbeispielen angeführten Materialien der Dielektrikumsfolien können selbstverständlich auch an-dere im Kondensatorbau geläufige Folien Verwendung finden. Die aufgedampften Metallschichten bestehen dabei z.B. aus Aluminium und können zusätzlich zu den aufgespritzten Randverstärkungen zusätzlich eine aufgedampfte Verstärkungsstufe im Randbereich aufweisen.

In Fig. 4 ist die Impulsbelastbarkeit I als Funktion der Breite b der aufgespritzten Randverstärkung dargestellt. Die Kurve bezieht sich auf eine Randverstärkung der Dicke 2 $\mu$m, wobei die aufgedampften Metallschichten eine Leitfähigkeit von 0,25 S mit einer geringfügigen Stufenverstärkung im Randbereich von 0,5 S besitzen. Die dargestellte Kurve bezieht sich sowohl auf Folien aus Polypropylen als auch auf Folien aus Papier. Der Fig. 4 ist zu entnehmen, daß durch die Breite der aufgespritzten Randverstärkung (bei gleichbleibender Dicke) die Impulsbelastbarkeit in weiten Grenzen variierbar ist.

Die Randverstärkungen werden vorzugsweise mittels des Schoop'schen Flamm-Metallspritzverfahrens hergestellt, sie können aber auch nach anderen Metallspritzverfahren, beispielsweise in einer Elektro-Metallspritz-Anlage aufgebracht werden.

## Ansprüche

1. Verfahren zum Herstellen eines elektrischen Wickelkondensators, indem Dielektrikumsfolien mit einem Versatz gegeneinander aufgewickelt werden, wobei zumindest ein Teil der Folien vor dem Aufwickeln mit aufgedampften regenerierfähig dünnen Metallschichten versehen werden, die nach dem Aufwickeln an den Stirnseiten des Kondensatorwickels mit Schoopschichten kontaktiert werden und bei dem die Metallschichten in den randseitigen Kontaktierzonen mit einer Verstärkung versehen werden, **dadurch gekennzeichnet**, daß die Randverstärkungen mittels eines Metallspritzverfahrens hergestellt werden.

2. Verfahren nach Anspruch 1, **dadurch gekennzeichnet**, daß die Randverstärkungen im Banddurchlaufverfahren unter Verwendung von Blenden aufgebracht werden.

3. Verfahren nach Anspruch 1 oder 2, **dadurch gekennzeichnet**, daß bei Verwendung von Zink die Randverstärkungen mit einer mittleren Schicht dicke von bis zu 20 $\mu$m aufgebracht werden.

4. Verfahren nach Anspruch 3, **dadurch gekennzeichnet**, daß die Randverstärkungen in einer mittleren Schichtdicke von ca. 2 $\mu$m und einer Breite von ca. 2 mm aufgebracht werden.

# FIG 1

# FIG 2

# FIG 3

# FIG 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-C- 892 322 (R. BOSCH GmbH) * Seite 2, Zeilen 50-95; Abbildungen 3,4 * | 1 | H 01 G 1/005 H 01 G 4/32 |
| A | US-A-3 303 550 (WESTERN ELECTRIC INC.) * Spalte 1, Zeile 53 .- Spalte 3, Zeile 4 * | 1-3 | |
| A | GB-A- 759 111 (SIEMEN & HALSKE AG) * Ansprüche 1-5 * | 1-4 | |
| A | FR-A- 765 208 (PORZELLANFABRIK KAHLA) * Seite 4, Zeilen 5-30 * | 1 | |
| A | NL-B- 44 859 (R. BOSCH AG) * Zeilen 1-11; Anspruch * | 1 | RECHERCHIERTE SACHGEBIETE (Int. Cl.4) H 01 G |

Der vorliegende Recherchenbericht wurde für alle Patentansprüche erstellt.

| Recherchenort DEN HAAG | Abschlußdatum der Recherche 20-05-1986 | Prüfer SCHUERMANS N.F.G. |
|---|---|---|